**Europäisches Patentamt**

**European Patent Office**

**Office européen des brevets**

(19)

(11) Publication number: **0 051 469**

**A1**

(12)

# EUROPEAN PATENT APPLICATION

(21) Application number: **81305168.7**

(22) Date of filing: **30.10.81**

(51) Int. Cl.³: **C 01 B 3/50**
**B 01 D 53/22**

(30) Priority: **03.11.80 US 203196**

(43) Date of publication of application:
**12.05.82 Bulletin 82/19**

(84) Designated Contracting States:
**DE FR GB IT NL**

(71) Applicant: **MONSANTO COMPANY**
**Patent Department 800 North Lindbergh Boulevard**
**St. Louis, Missouri 63166(US)**

(72) Inventor: **Bollinger, Wayne Allen**
**1203 Balmoral Drive**
**Cary North Carolina 27511(US)**

(74) Representative: **McLean, Peter et al,**
**Monsanto House 10-18 Victoria Street**
**London, SW1H ONQ(GB)**

(54) Process for separating a gas from a mixture of gases.

(57) In order to recover a substantially constant percentage of one gas from a gas mixture regardless of mixture flow rate, the pressure of the gas mixture in contact with a membrane is varied in proportion to variations in flow rate of the gas mixture.

FIG. I.

EP 0 051 469 A1

-1-

## PROCESS FOR SEPARATING A GAS FROM A MIXTURE OF GASES

### BACKGROUND OF THE INVENTION

A. Field of the Invention

This invention relates to methods for separating one gas from a mixture of gases.

B. Prior Art

In certain processes there will be found a gas stream made up of a mixture of gases containing unreacted hydrogen as a part of the mixture. It is known that this unreacted hydrogen can be separated from certain other gases or a mixture of gases by utilizing a membrane which is more permeable to hydrogen than the other gases. The gas mixture is brought into contact with one side of the membrane and permeated hydrogen is recovered from the other side of the membrane.

One disadvantage of this known process is that variations in the flow rate of the gas stream result in variations in the amount of hydrogen separated from the gas stream. If the gas stream is to be fed to another process, the varying amount of hydrogen remaining in the gas stream can cause upsets in that process. It would be desirable to have a process for removing hydrogen or other gases from a process stream wherein the amount of hydrogen or other gas removed from the stream remains substantially constant at varying stream flow rates.

## SUMMARY OF THE INVENTION

A process for removing a substantially constant percentage of one gas from a mixture of gases containing the one gas and having a variable flow rate wherein the mixture of gases is brought into contact with one side of a membrane more permeable to the one gas than the other gases of the stream and the one gas permeates through and is recovered from the other side of the membrane. The gas mixture is maintained under a higher pressure than is the permeated gas such that a pressure differential exists across the membrane. This pressure differential is varied in proportion to variations in the flow rate of the gas mixture such that the ratio of pressure differential change to flow rate change remains substantially constant so that a substantially constant percentage of the one gas is removed from the gas mixture regardless of the flow rate of the gas mixture.

## DESCRIPTION OF THE DRAWINGS

FIGURE 1 is a schematic view showing apparatus which is useful in carrying out the process of the present invention.

FIGURE 2 is a graph showing pressure differentials across a separation membrane plotted against flow rates of a gas mixture in contact with one side of the membrane.

## DETAILED DESCRIPTION OF THE INVENTION

Referring now to detail of the drawing, there is shown a system having an inlet line 11 leading to one or more membrane separators or permeators 12-14 connected in series by lines 16 and 17 such that a mixture of gases fed into the system through line 11 passes through the separators 12-14 in series. The separators 12-14 are a known type which utilizes a membrane more permeable to one gas than other gases of a mixture commonly found in process streams. The mixture of gases is brought into contact with one side of the membrane and the more permeable gas permeates through and is recovered from the other side of the membrane. This recovered gas is withdrawn through line 18 to a compressor 19 or a process operating at a substantially constant intake pressure, so that the permeated gas is under a substantially constant pressure. The non-permeated gas stream exits from the separator 14 and is passed through a line 21 to be vented or fed to another process as desired.

The amount of permeated gas recovered from the gas stream is maintained at a substantially constant percentage by controlling the pressure differential, dP, across the membranes in the separators 12-14 and varying this pressure differential in direct proportion to variations in the flow rate of the gas mixture entering the separator 12. A flow rate sensing unit 22 of a known type is connected to the inlet line 11 to sense the flow rate of the gas mixture into the permeators and to provide a signal to a pressure-sensor/valve-control unit 23 of a known type. The unit 23 receives the signal from the sensing unit 21, senses the pressure in the line 21 and actuates a valve 24 in the line 21 to control and vary the pressure of the gas mixture in the separators 12-14. It can readily be seen that holding the valve 24 closed will cause the pressure of the gas mixture in the separators 12-14 to rise toward and essentially reach the pressure of the gas being fed in through the line 11. Conversely, if the valve 24 is held open, the pressure of the gas mixture in the separators 12-14 will fall.

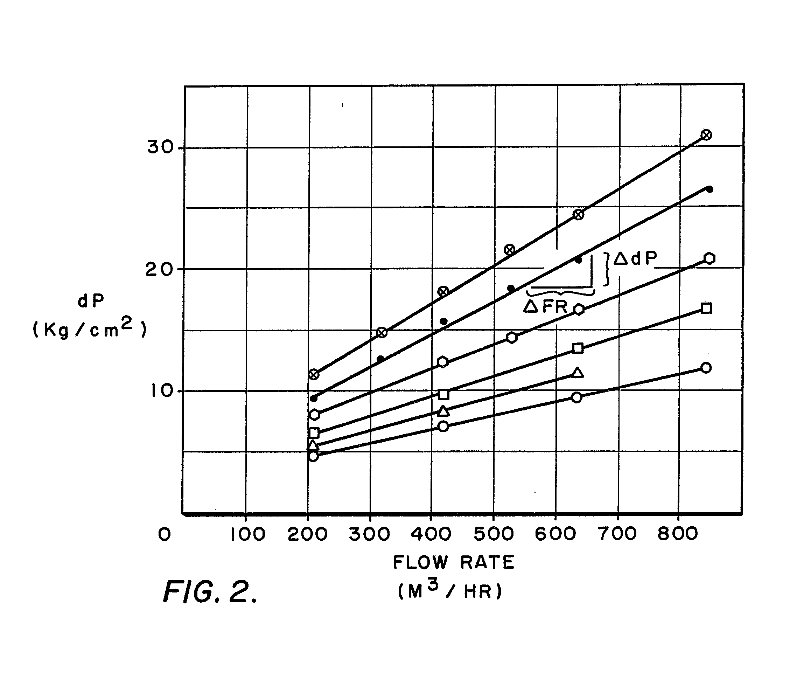

In operation, the flow rate sensing unit 22 senses the flow rate of the gas passing through the line 11 and provides a signal to the unit 23 which senses the pressure in the line 21 and operates the valve 24 in accordance with the signal and the pressure in the line 21 to vary the pressure in the separators 12-14 in direct proportion to variations in the flow rate of the gas mixture sensed by the unit 22. Inasmuch as the compressor 19 accepts the permeated gas at a substantially constant pressure, variations in pressure caused by operating the valve 24 result in identical variations in the pressure differential, dP, across the membranes in the permeators or separators 12-14. These variations in the pressure differential across the separating membranes are varied directly with variations in the flow rate such that the ratio of pressure differential change to flow rate change remains substantially constant over a wide variety of flow rates. This is clearly shown in Figure 2 where pressure differentials across the membrane are plotted against flow rates for various percentages of hydrogen to be recovered from a gas mixture containing hydrogen. It will be readily apparent from this figure that the ratio of change in pressure differential to change in flow rate is the slope of each line and, since each line is essentially straight, these slopes remain constant over wide variations in flow rate.

It will also be readily apparent from Figure 2 that if the ratio of change in pressure differential across the membrane to change in flow rate in the line 11 is maintained at a substantially constant value, then a substantially constant percentage of the one gas will be recovered from the gas mixture, in this case a mixture of hydrogen and methane. This will leave a constant percentage of hydrogen in the gas stream leaving the system through the line 21.

The three separators used in developing the data represented in Figure 2 each had an effective membrane area of about 90 square meters, for a total membrane area of about 270 square meters. The use of a different permeating surface area will change the slopes of the lines shown in Figure 2. The ratio of pressure differential change to flow rate change, or slope, should be chosen such that this ratio or slope, expressed in terms of $Kg/cm^2/M^3/hr$, multiplied by the effective membrane permeating area in square meters, $M^2$, gives an operating constant within the range of 1.5 to 10, preferably about 2 to 7. The use of different operating constants within this range will result in the recovery of different percentages of the more permeable gas.

When the effective permeation area is known, the operating constant can be used to determine the slope or ratio of pressure differential change to flow rate change for a desired percentage of gas recovery. The slope to be used is obtained by dividing the operating constant by the area in square meters. This slope will be in terms of $Kg/cm^2/M^3/hr$. The use of higher operating constants, in the range of 1.5 to 10, gives greater slopes and higher percentages of gas recovery.

Wide variations in the flow rate of the gas stream can be handled by this process. It has been found that gas mixtures having a range of variation in flow rate of up to about 20 times the minimum flow rate can be accommodated. Preferably, however, the variation in flow rate will not exceed about 10X the minimum flow rate and even more preferably will not exceed 5X the minimum flow rate.

The membranes used in the separators 12-14 are preferably in the form of hollow filaments or fibers 28 mounted in a bundle in a tubular shell 29. Preferred membranes are the multicomponent membranes disclosed by Henis, et al., in U. S. Patent Application Serial No. 832,481, filed September 13, 1977, now U. S. Patent 4,230,463. Other patents disclose similar separators or permeators where bundles of hollow filaments mounted in a tubular shell serve as a membrane for separating one gas from one or more other gases. Preferably the gas mixture is fed into the shell 29 to come into contact with the outer surfaces of the hollow filaments 28, with the more permeable gas from the gas stream permeating through the walls of the fibers to the bores thereof and being withdrawn under a substantially constant pressure through the line 18. Such separators are known to those skilled in the art.

The pressure differential across the membrane, i.e., from the feed gas mixture to the permeated gas, is not a ratio of one pressure to another but is the difference between these two pressures. Pressure differentials from as low as 1.03 kg/cm$^2$ (1 atmosphere) to as great as 150 kg/cm$^2$ (150 atmospheres) or higher can be accepted by the preferred membranes without damage to such membranes, particularly the preferred hollow fiber membranes. The pressure differential across the membrane causes the hydrogen to permeate through the membrane, while varying this pressure differential with variations in gas flow as described herein, insures that a substantially constant percentage of hydrogen is removed from the gas stream regardless of the flow rate of the gas stream. With the percentage of hydrogen in the stream entering the line 11 being constant, the removal of a constant percentage will leave a constant percentage in the stream exiting through the line 21.

The rate at which the gas permeates through the membrane depends upon the particular membrane used. Especially desirable membranes for use in the process of this invention where hydrogen is the more permeable gas exhibit hydrogen permeabilities of at least about 1x10$^{-6}$ and preferably from 1x10$^{-5}$ to 5x10$^{-4}$ cubic centimeters of hydrogen at standard temperature and pressure per square centimeter of membrane surface area per second at a pressure differential of 1 centimeter of mercury across the membrane. The membrane should have

0051469
36-0445

a separation factor of at least about 10 for the more permeable gas in preference to at least one other slower permeating gas in the feed gas mixture. Preferably, the membrane will have a separation factor of at least about 20 in preference to at least one other slower permeating gas in the feed gas mixture. For example, separation factors for hydrogen over methane and other gases of 50 or even 100 or greater are provided by certain membranes. The selectivity or separation factor of a membrane is described in terms of the ratio of the permeability of the faster permeating gas to the permeability of a slower permeating gas. Some of the gases which have significantly slower permeating rates with a given membrane, compared to gases such as hydrogen and hydrogen sulfide, are methane and other hydrocarbon gases having one to five carbon atoms, nitrogen, carbon monoxide,etc.

For purposes of disclosure, the process is described in the Examples in terms of recovering hydrogen from slower permeating gases. However, it should be understood that the process is equally applicable to other systems where one gas of a mixture of gases has a higher permeability rate than others of the mixture.

## EXAMPLE 1

In the catalytic hydrogenation of adiponitrile to hexamethylene diamine a recirculating blanketing gas mixture is used. In order to lower the amounts of non-reactive gases such as methane and nitrogen and maintain a high hydrogen content in the recirculated gas mixture, a purge stream is taken from the mixture and hydrogen is separated from the purge stream by the process of this invention. The purge stream is then discarded or otherwise used and the permeated hydrogen is returned to blanketing gas. The purge stream flows to the permeators at a rate which varies from about 210 to about 850 standard $M^3$/hr.

This purge gas mixture is scrubbed twice with water to remove water soluble reactants and product entrained liquids and vapors and is directed to a liquid separator drum to remove any condensed water. The scrubbed purge gas mixture is delivered from the separator drum at a flow rate within the above range, a pressure ranging from 14 to 35 kg/cm$^2$ and a temperature of from about 20° to 45°C. This purge gas

mixture, having a composition of approximately 80 mole percent hydrogen and 20 mole percent methane, saturated with water vapor, constitutes the gas mixture to be fed to the membrane permeator units 12-14. The pressure under which the gas mixture is fed into the permeators 12-14 will usually be essentially constant for a given process but may vary considerably from one process to another. The amount of this pressure is not of importance, provided the proper pressure differential across the permeator membrane is maintained.

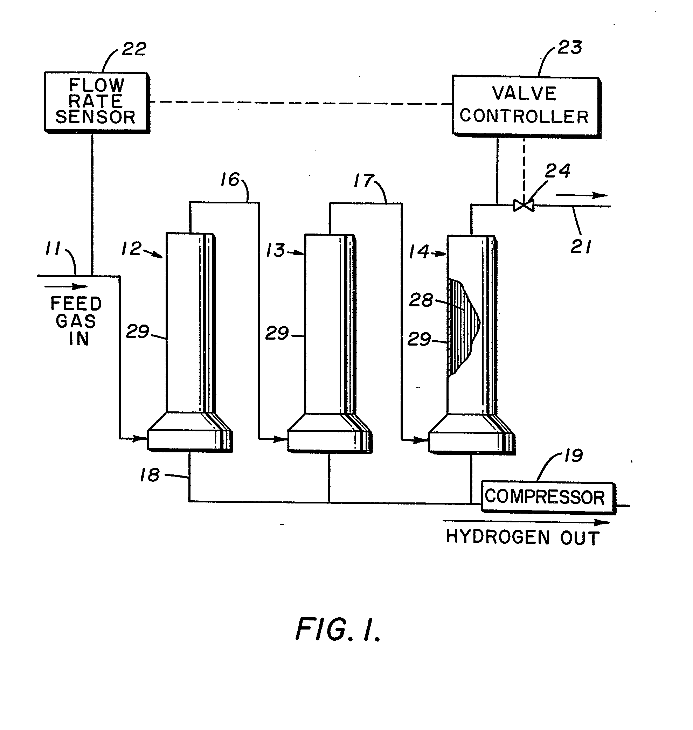

The membrane separators or permeators consist of three hollow fiber membrane permeators connected in series as illustrated in Figure 1. Each permeator has an effective permeating surface area of approximately 90 square meters, for a total effective permeating surface area of approximately 270 square meters.

The flow rate of the feed gas mixture is continuously monitored by an automatic flow rate sensing unit 22 of a known type connected to the line 11 at the inlet of the permeator 12. The unit 22 senses changes in the flow rate of the gas mixture and provides a signal to control an automatic pressure sensor/valve control unit 23 of a known type connected to the line 21 at the outlet of the permeator 14. The unit 23 receives the signal from the unit 22, senses the pressure in the line 21 and actuates the valve 24 to vary the pressure of the gas mixture in contact with the membranes in the permeators 12-14 in response to variations in the flow rate of the gas mixture. Since the pressure drop is only about 0.35 $kg/cm^2$ in the shell of each permeator, this manner of pressure control effectively changes the shell pressure of the feed gas mixture in direct linear relationship to changes in the flow rate of the gas mixture. That portion of the gas mixture which does not permeate through the membranes, consisting of about 35 to 50 mole percent hydrogen and 65 to 50 mole percent methane, is withdrawn from the shell of the last permeator 14 and directed through the line 21 to a feed gas header (not shown) supplying an associated natural gas reformer header (not shown). The hydrogen gas which permeates into the bores of the hollow fiber membranes is taken off through the line 18 at a substantially constant pressure and is suitable for usage in other processes or by compression and reuse in the hydrogenation reaction by charging it back to the recirculating blanketing gas stream.

The membrane permeators used in this example are polysulfone hollow fiber membranes coated on the outside surface with a crosslinked poly(siloxane) in occluding contact with that surface. These membranes are prepared substantially in accordance with the method disclosed in Example 64 of U. S. Patent Application Serial No. 832,481, filed September 13, 1977 of Henis, et al., now Patent No. 4,230,463. The fibers had an outside diameter of about 500 microns, an inside diameter of about 250 microns and a wall thickness of about 125 microns. The hollow fiber membranes demonstrated a permeability for hydrogen of approximately $75 \times 10^{-6}$ cc/cm$^2$-sec-cmHg under standard conditions and had a separation factor for hydrogen with respect to methane of about 30.

The results, as determined by computer, of operating in the above manner at flow rates varying from 210 to 850 standard M$^3$/hr. of feed gas mixture at a substantially constant recovery of 86 percent of hydrogen from a stream containing 95 percent hydrogen are set out in Table 1 below. This table shows changes in flow rate and changes in differential pressure and lists the ratio of changes in pressure differential to changes in flow rate, this ratio being the slope of the line obtained by plotting flow rate against pressure differential. Also shown is the operating constant, which is the product of the slope and membrane area and which is used with membrane area to determine the slope or pressure differential change to flow rate change ratio to be used in carrying out the process of the invention. In determining the operating constant the slope is expressed as Kg/cm$^2$/M$^3$/hr and membrane area is in square meters.

TABLE 1

| Flow Rate of Feed $M^3/hr$ | $\Delta$ FR $M^3/hr$ | Pressure Differential $kg/cm^2$ | $\Delta$ dP $kg/cm^2$ | Slope $\Delta$ dP:$\Delta$ FR | Operating Constant* |
|---|---|---|---|---|---|
| 211.5 | - | 9.14 | - | - | |
| 317.1 | 105.7 | 11.60 | 2.46 | 0.0232 | 6.48 |
| 422.9 | 211.5 | 14.06 | 4.92 | 0.0232 | 6.48 |
| 528.7 | 317.2 | 16.52 | 7.38 | 0.0232 | 6.48 |
| 634.4 | 422.9 | 18.63 | 9.49 | 0.0232 | 6.48 |
| 845.9 | 634.4 | 23.90 | 14.76 | 0.0232 | 6.48 |

* Operating constant = membrane area x slope = $M^2$ x $kg/cm^2/M^3/hr$ = $M^2 kghr/M^3 cm^2$ = $kghr/M\ cm^2$

EXAMPLE 2

Figure 2 shows pressure differential plotted against flow rate for recovery of various percentages of hydrogen from the process stream of Example 1. The lines on this chart from bottom to top represent, respectively,

50% recovery at 97.5% purity,

60% recovery at 97% purity,

70% recovery at 97% purity,

80% recovery at 97% purity,

90% recovery at 95% purity and

94% recovery at 93% purity.

It will be noted that each line in Figure 2 is substantially straight, the slope of each line being $\Delta dP/\Delta FR$. Inasmuch as these lines are substantially straight, the slope of any line remains substantially constant over a wide range of flow rates so that the operating constant remains substantially the same regardless of the flow rate of the gas mixture. It will also be noted that the slopes increase as percent recovery is increased.

EXAMPLE 3.

The procedure of Example 1 was repeated using the apparatus described above. The amount of hydrogen in the feed gas mixture and the percentage of recovery of hydrogen were varied. The amount of hydrogen in the feed gas mixture was varied from 50 to 90 mole percent and the percentage hydrogen recovery was varied from 40 percent to 90 percent of hydrogen present in the feed gas mixture while the concentration of hydrogen in the permeated gas mixture was maintained at 95 mole percent hydrogen. In Table 2 below there are reported the slopes representing $\Delta dP:\Delta FR$, or $kg/cm^2/M^3/hr$ required for maintaining such percentage recovery of hydrogen substantially constant during changes in the flow rates of the feed gas mixture for each different feed gas mixture composition.

TABLE 2

| Mole % $H_2$ in Feed | Slope $\Delta dP:\Delta FR$ to Recover Percent of $H_2$ | | | | | |
|---|---|---|---|---|---|---|
|    | 90 | 80 | 70 | 60 | 50 | 40 |
| 90 | 0.0196 | 0.0159 | 0.0134 | 0.0112 | 0.0092 | 0.0073 |
| 80 | 0.0244 | 0.0182 | 0.0147 | 0.0120 | 0.0097 | - |
| 70 | 0.0280 | 0.0202 | 0.0159 | 0.0127 | 0.0101 | - |
| 60 | 0.0309 | 0.0219 | 0.0170 | 0.0134 | 0.0105 | 0.0078 |
| 50 | 0.0333 | 0.0235 | 0.0179 | 0.0140 | 0.0109 | - |

The operating constant for each run can be determined by multiplying the appropriate slope by 270, the effective permeation area in square meters used in these runs. For example, the operating constant for 90 percent recovery of a hydrogen from a stream containing 90 percent hydrogen is 0.01964 x 270 = 5.30. The slope, or ratio of pressure differential change to flow rate change, can be selected for other permeators by dividing the operating constant by permeator membrane area in square meters. The operating constant may range from 1.5 to 10 and preferably is in the range of 2 to 7.

## EXAMPLE 4

A hydrotreater was used to hydrogenate a mercaptan to hydrogen sulfide for removal of the mercaptan from an oil. The oil was treated with hydrogen, with unreacted hydrogen and hydrogen sulfide from the oil treatment being recirculated to the hydrotreater. To increase the amount of hydrogen in the recirculated stream, a purge stream was taken from the recirculating gas mixture and the process of this invention was used to recover hydrogen from the purge gas mixture for recharging to the hydrotreater. Table 3 shows data taken from this run.

### TABLE 3

| Flow Rate of Feed $M^3$/hr | $\Delta$FR $M^3$/hr | Pressure Differential kg/cm$^2$ | $\Delta$dP kg/cm$^2$ | Slope x $10^4$ kg/cm$^2$/$M^3$/hr |
|---|---|---|---|---|
| 25252 | - | 17.58 | - | - |
| 74222 | 48970 | 38.15 | 20.57 | 4.20 |
| 128974 | 103722 | 61.14 | 43.56 | 4.20 |
| 188446 | 163194 | 86.12 | 68.54 | 4.20 |

The permeator had an effective area of 9011.6 square meters and the operating constant used was 3.78, to give a slope of 3.78/9011.6, or 0.00042 kg/cm$^2$/$M^3$/hr.

- 12 -

CLAIMS

1. A process for separating one gas from a mixture of said one gas and at least one other gas, comprising

   a. bringing said gas mixture at a varying flow rate into contact with one side of a membrane more permeable to said one gas than said other gas to allow said one gas to permeate through the membrane, said gas mixture being under a first pressure; and

   b. recovering said permeated one gas from the other side of said membrane, said permeated gas being at a second pressure lower than said first pressure such that there is a pressure differential across the membrane; characterised by

   c. varying said pressure differential with variations in said flow rate in such a manner that the ratio of change in said pressure differential to change in said flow rate remains substantially constant.

2. A process of Claim 1, wherein the product of said ratio and the effective surface area of said membrane is within the range of 1.5 to 10, where the pressure differential is expressed in terms of $kg/cm^2$, the flow rate is expressed in terms of standard cubic meters per hour and said surface area is expressed in terms of square meters.

3. A process of either Claim 1 or Claim 2, wherein the membrane is in the form of hollow fibers.

4. A process of any of the preceding claims, wherein the flow rate of said feed gas varies within a range such that the maximum flow rate is no more than 20 times the minimum flow rate.

5. A process of Claim 4, wherein said maximum flow rate is no more than 10 times the minimum flow rate.

6.   A process of any of the preceding claims, wherein the second pressure is held substantially constant and the first pressure is varied to vary said pressure differential.

7.   A process of any of the preceding claims, wherein said one gas is hydrogen.

8.   A process of Claim 7, wherein said membrane has a separation factor of at least 10 for hydrogen in preference to at least one other gas in said gas mixture.

9.   A process of either Claim 7 or Claim 8, wherein said member has a permeability for hydrogen of at least about $1x10^{-6}$ cc of hydrogen per square centimeter of membrane surface area per second at a partial pressure drop of 1 centimeter of mercury.

10.   A process of any of Claims 7 to 9, wherein said other gas is at least one gas selected from the group consisting of nitrogen, carbon monoxide and hydrocarbon gases having one to five carbon atoms.

11.   A process of any of the preceding claims, wherein flow rate variations are sensed and the pressure differential is changed in response to said sensed flow rate changes.

12.   A process according to Claim 10 for recovering hydrogen from a gas stream made up of a mixture of hydrogen and said at least one other gas, comprising:

    a.   bringing the gas stream at a varying flow rate into contact with the outer surface of a hollow fiber having a greater permeability for hydrogen than said at least one other gas so that said hydrogen permeates to the interior of the hollow fiber, said gas stream being under a first pressure;

    b.   withdrawing the permeated hydrogen from the interior of the fiber under a second pressure, said second pressure being less than said first pressure such that a pressure differential exists between the exterior and interior of the fiber;

    c.    sensing the flow rate of the gas stream to detect changes therein, and

    d.    varying said pressure differential as aforesaid in proportion to changes detected in said flow rate.

13.    A process of Claim 12, wherein the ratio selected is such that said product is within the range of 2 to 7.

14.    A process of either Claim 12 or Claim 13, wherein both flow rate and gas mixture pressure are sensed, said flow rate being sensed at a first point upstream of the hollow fiber and said pressure being sensed at a second point downstream of said hollow fiber.

0051469

FIG. I.

FIG. 2.

0051469

European Patent
Office

**EUROPEAN SEARCH REPORT**

Application number

EP 81 30 5168.7

## DOCUMENTS CONSIDERED TO·BE RELEVANT

| Category | Citation of document with indication, where appropriate, of relevant passages | Relevant to claim |
|---|---|---|
| | EP – A1 – 0 017 463 (MONSANTO)<br>* pages 1 to 13 * | 1-10 |
| D | US – A – 4 230 463 (HENIS et al.) | |

**CLASSIFICATION OF THE APPLICATION (Int. Cl.³)**

C 01 B 3/50
B 01 D 53/22

**TECHNICAL FIELDS SEARCHED (Int. Cl.³)**

B.01 D 53/00
C 01 B 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 06-01-1982 | KESTEN |

EPO Form 1503.1  06.78